Europäisches Patentamt

European Patent Office

Office européen des brevets

(19)

(11) **EP 0 779 242 B1**

(12) **EUROPEAN PATENT SPECIFICATION**

(45) Date of publication and mention
of the grant of the patent:
**26.04.2000 Bulletin 2000/17**

(51) Int Cl.[7]: **C01F 7/68**, C01F 7/56,
C02F 1/52

(21) Application number: **96119765.4**

(22) Date of filing: **10.12.1996**

(54) **Process for preparing stable high basicity aqueous solutions of basic aluminium chlorosulphate or basic aluminium chloride**

Verfahren zur Herstellung von stabilen wässrigen Lösungen mit hoher Stabilität von basischem Aluminiumchlorosulfat oder basischem Aluminiumchlorid

Procédé de préparation de solutions aqueuses stables de chlorosulfate ou de chlorure d'aluminium basique de haute stabilité

(84) Designated Contracting States:
**AT BE CH DE FR GB IT LI NL SE**

(30) Priority: **14.12.1995 IT MI952626**

(43) Date of publication of application:
**18.06.1997 Bulletin 1997/25**

(73) Proprietor: **AUSIMONT S.p.A.**
**I-20121 Milano (IT)**

(72) Inventors:
• **Marzolini, Fausto**
**Milano (IT)**

• **Ardenti, Aurelio**
**Milano (IT)**

(74) Representative: **Sama, Daniele, Dr. et al**
**Sama Patents**
**Via Morgagni, 2**
**20129 Milano (IT)**

(56) References cited:
**EP-A- 0 256 832** **FR-A- 2 036 685**
**GB-A- 2 113 666** **GB-A- 2 128 977**
**US-A- 2 196 016**

**Description**

The present invention relates to a process for preparing stable aqueous solutions of basic aluminium chlorosulphate or basic aluminium chloride having a Cl/Al molar ratio from 0.90 to 1.22, a $SO_4$/Al molar ratio from 0.02 to 0.15 in the case of basic aluminium chlorosulphate, a 50-65% basicity according to the formula

$$\frac{\% \text{ by weight } Al_2O_3/17 - (\% \text{ by weight } Cl/35.5 + \% \text{ by weight } SO_4/48)}{\% \text{ by weight } Al_2O_3/17} \times 100,$$

an $Al_2O_3$ title up to 19% by weight and a content of calcium lower than 0.05% by weight.

Said solutions, even though with an $Al_2O_3$ title around 10% by weight, are known, as well as their utility in waters treatment. They are generally prepared by a process which comprises:

a) the deep etching of $Al(OH)_3$ with HCl and $H_2SO_4$ aqueous solutions, at the boiling point (about 113°C);
b) the subsequent treatment of the solution obtained with $CaCO_3$ to lower the level of the $SO_4$ ions, with $CaSO_4$ precipitation;
c) separation of $CaSO_4$ from the solution by filtration and/or centrifugation.

Such process results critical and expensive since the formation of remarkable amounts of $CaSO_4$ requires additional and expensive filtration and/or centrifugation operations and the need to dispose of the so separated $CaSO_4$.

It has now been found a process for obtaining stable aqueous solutions of basic aluminium chlorosulphate having high basicity which does not require expensive filtration and/or centrifugation operations since by-products, which must be successively separated, do not form.

The process according to the present invention comprises treating with subdivided metallic aluminium, low basicity aqueous solutions of basic aluminum chlorosulphate or basic aluminium chloride, previously diluted with water and optionally acidified with $H_2SO_4$, at temperatures of 80°-105°C and at atmospheric pressure with obtainment of stable high basicity solutions of basic alluminium chlorosulphate or basic aluminium chloride suitable for waters treatment.

Such process in one single phase results therefore simple and cheap both for plant and operating costs, moreover it allows to obtain stable, more concentrated solutions of basic aluminium chlorosulphate, i.e. having an $Al_2O_3$ title higher than that of the known stable solutions, with considerable savings in transport costs of said solutions to the user.

Object of the present invention is therefore a process for preparing stable aqueous solutions of basic aluminium chlorosulphate or basic aluminium chloride having a Cl/Al molar ratio from 0.90 to 1.22, preferably of 1.07, a $SO_4$/Al molar ratio from 0.02 to 0.15 and preferably of 0.13 in the case of basic aluminium chlorosulphate, a 50-65% basicity, preferably of 56% calculated according to the formula

$$\frac{\% \text{ by weight } Al_2O_3/17 - (\% \text{ by weight } Cl/35.5 + \% \text{ by weight } SO_4/48)}{\% \text{ by weight } Al_2O_3/17} \times 100,$$

a $Al_2O_3$ title up to 19% by weight and a content of calcium lower than 0.05% by weight, comprising:

A) dilution with water of aqueous solutions of basic aluminum chlorosulphate or basic aluminum chloride having a Cl/Al molar ratio comprised between 1.6 and 2.0, a $SO_4$/A1 molar ratio from 0.0 to 0.05, a basicity from 33 to 42% and an $Al_2O_3$ title of about 17% by weight, until diluted solutions having an $Al_2O_3$ title from 11.8 to 13% by weight are obtained;
B) acidification of the solution obtained in (A) with $H_2SO_4$ in amounts from 0 to 0.41 moles per mole of $Al_2O_3$ of the solution;
C) heating the solution at a temperature from 80° to 105°C, preferably from 80° to 95°C, subsequent slow addition of from 0.9 to 1.98 gramatoms of subdivided metallic aluminium per mole of $Al_2O_3$ of the solution, by maintaining the temperature at values not higher than 105°C, preferably from 80° to 95°C, until complete dissolution of the metallic aluminium;
D) optional dilution with water of the solution obtained in (C) until an $Al_2O_3$ title of about 10% by weight.

The acidification step (B) with $H_2SO_4$ can be optionally carried out at the end of the dissolution of the metallic aluminium after step (C) .

The aqueous solutions of basic aluminium chlorosulphate or basic aluminium chloride having a basicity from 33 to 43%, used as starting substances in step (A), are known and commercially available, such as for instance ALPOCLAR(R) 200 manufactured by Ausimont S.p.A.

The subdivided metallic aluminium introduced in step (C) can be in the form of chips, granules or powders.

An example of suitable aluminium is that having a purity of 98.7%.

In step (C) the reaction of dissolution of the metallic aluminium is exothermic, wherefore aluminium is to be added gradually in a time generally comprised between 30 and 240 minutes and by controlling the temperature so that it does not exceed 105°C.

At the end of the reaction the solution is kept under stirring at 80-105°C to complete the aluminium dissolution.

The solutions obtained by the process according to the present invention result limpid, without opalescence and show a stability of at least three months like the commercial solutions having the same basicity used for waters treatment.

Some examples are now given for illustrative purposs.

## EXAMPLE 1

In a 2 l flask, 335 g of ALPOCLAR(R) 200 type (a) are introduced, which consists of an aqueous solution of basic aluminium chlorosulphate having an $Al_2O_3$ title of 17.2% by weight, a content in Cl ions of 21.6% by weight, a content in $SO_4$ ions of 1.3% by weight and a 37% basicity.

150 g of water are subsequently introduced in order to have a solution with an $Al_2O_3$ title of 12.09% by weight.

The obtained solution is acidified by addition of 20.8 g of 96% $H_2SO_4$, and keeping it under stirring, it is heated to 85-95°C.

When such a temperature is reached, 22 g of metallic aluminium chips are slowly added to the solution kept under stirring, by maintaining the reaction temperature at 85°-95°C.

When the addition of metal aluminium is ended, in a time of 30-60 minutes, the reaction mixture is kept under stirring at a temperature of 85°-95°C for further 3 hours to complete the dissolution of the metallic aluminium.

The obtained solution is then diluted with 452 g of water to have a final solution with an $Al_2O_3$ title of 10.26% by weight.

The final solution of basic aluminium chlorosulphate has an $Al_2O_3$ title of 10.26% by weight, a content in Cl ions of 7.67% by weight, a content in $SO_4$ ions of 2.42% by weight, a Cl/Al molar ratio of 1.07, a $SO_4$/Al molar ratio of 0.13 and a basicity of 56%.

The obtained solution appears limpid and results stable for at least 3 months.

## EXAMPLES 2-7

The procedure of Example 1 was repeated by using the amounts of ALPOCLAR(R) 200 type (a), of metallic Al, of $H_2SO_4$ and of initial and final dilution $H_2O$ as reported in Table 1.

The characteristics of the obtained solutions of basic aluminium chlorosulphate are reported in Table 1.

Said solutions appear limpid and result stable for at least 3 months.

## EXAMPLE 8 (comparative)

The procedure of Example 1 was repeated by using the amounts of ALPOCLAR(R) 200 type (a), of metallic Al, of $H_2SO_4$ and of initial and final dilution $H_2O$ as reported in Table 1.

It results therefrom that the solution put to react has an $Al_2O_3$ title of 11.46% by weight and that the molar ratio between the added metallic Al and $Al_2O_3$ of the solution is 1.98.

The characteristics of the obtained solution of basic aluminium chlorosulphate are reported in Table 1.

Said solution appears opalescent and does not result stable.

## EXAMPLE 9

Example 1 was repeated with the difference that the final dilution with water was not carried out.

The characteristics of the obtained solution of basic aluminium chlorosulphate having high $Al_2O_3$ title (18.73%) are reported in Table 1.

Said solution appears limpid and results stable for at least 3 months.

### EXAMPLE 10 (comparative)

Example 9 was repeated with the difference that 100 g of initial dilution water were employed instead of 150 g.

It results therefrom that the solution put to react with metallic Al has an $Al_2O_3$ title of 13.42% by weight.

The characteristics of the obtained solution of basic aluminium chlorosulphate are reported in Table 1. Said solution appears opalescent and does not result stable.

### EXAMPLES 11-13

The procedure of Example 1 was repeated by using the amounts of ALPOCLAR[(R)] 200 respectively of type (b), (c) and (d), of metallic Al, of $H_2SO_4$ and of water of initial and final dilution water as reported in Table 1.

The obtained solutions of basic aluminium chlorosulphate having the characteristics reported in Table 1, appear limpid and result stable for at least 3 months.

### EXAMPLE 14

Example 1 was repeated with the difference that $H_2SO_4$ was added to the solution after the dissolution reaction of the metallic Al has been carried out, instead before such reaction.

The obtained solution of basic aluminium chlorosulphate shows the same characteristics and the same stability of the solution obtained according to example 1.

### EXAMPLE 15

Example 1 was repeated with the difference that the dissolution reaction of the metallic Al was carried out at a temperature of 105°C instead of at 85°-95°C.

A solution of basic aluminium chlorosulphate was obtained having the same characteristics and stability of the solution obtained in example 1.

### EXAMPLE 16

Example 15 was repeated with the difference that the $H_2SO_4$ was added to the solution after the dissolution reaction of the metallic Al has been carried out.

A solution of basic aluminium chlorosulphate was obtained having the same characteristics and stability of the solution obtained in example 1.

Table 1

| Ex. | Temp. °C | ALPOCLAR 200 type * | ALPOCLAR 200 g | Al g | N.SO₄ 96% g | H₂O initial g | H₂O final g | Al₂O₃ % by wt | Cl % by wt | SO₄ % by wt | Basicity % | Molar Cl/Al | Molar SO₄/Al | Appearance | Stability months |
|---|---|---|---|---|---|---|---|---|---|---|---|---|---|---|---|
| | | **Reaction conditions** | | | | | | **Final solution** | | | | | | | |
| 1 | 85-95 | (a) | 355 | 22 | 20.8 | 150 | 452.2 | 10.26 | 7.67 | 2.42 | 56 | 1.07 | 0.13 | limpid | 3 |
| 2 | 85-95 | (a) | 335 | 23.8 | 20.8 | 150 | 470.4 | 10.26 | 7.24 | 2.39 | 58 | 1.01 | 0.12 | limpid | 3 |
| 3 | 85-95 | (a) | 400 | 17.9 | 20.8 | 150 | 411.3 | 10.26 | 8.64 | 2.48 | 51 | 1.21 | 0.13 | limpid | 3 |
| 4 | 85-95 | (a) | 355 | 22 | 23.0 | 150 | 450 | 10.26 | 7.67 | 2.62 | 55 | 1.07 | 0.14 | limpid | 3 |
| 5 | 85-95 | (a) | 355 | 22 | 25.0 | 150 | 448 | 10.26 | 7.67 | 2.81 | 55 | 1.07 | 0.15 | limpid | 3 |
| 6 | 85-95 | (a) | 355 | 22 | 15.0 | 150 | 458 | 10.26 | 7.67 | 1.87 | 58 | 1.07 | 0.10 | limpid | 3 |
| 7 | 85-95 | (a) | 355 | 22 | 0.0 | 150 | 473 | 10.26 | 7.67 | 0.46 | 63 | 1.07 | 0.02 | limpid | 3 |
| 8 comp. | 85-95 | (a) | 300 | 27 | 20.8 | 150 | 502.2 | 10.26 | 6.48 | 2.35 | 62 | 0.91 | 0.12 | opalescent | unstable |
| 9 | 85-95 | (a) | 355 | 22 | 20.8 | 150 | 0.0 | 18.73 | 14.00 | 4.42 | 56 | 1.07 | 0.13 | limpid | 3 |
| 10 comp. | 85-95 | (a) | 355 | 22 | 20.8 | 100 | 0.0 | 20.61 | 15.40 | 4.86 | 56 | 1.07 | 0.13 | opalescent | unstable |
| 11 | 85-95 | (b) | 384 | 19.3 | 20.8 | 150 | 425.9 | 10.25 | 7.68 | 2.46 | 56 | 1.08 | 0.13 | limpid | 3 |
| 12 | 85-95 | (c) | 333 | 24 | 20.8 | 150 | 472.2 | 10.26 | 7.66 | 2.39 | 56 | 1.07 | 0.12 | limpid | 3 |
| 13 | 85-95 | (d) | 365 | 21 | 26.0 | 150 | 438 | 10.24 | 7.67 | 2.45 | 56 | 1.07 | 0.13 | limpid | 3 |

*

| ALPOCLAR 200 type | Al₂O₃ % by wt. | Cl % by wt. | SO₄ % by wt. | Basicity % | Molar Cl/Al | Molar SO₄/Al |
|---|---|---|---|---|---|---|
| (a) | 17.2 | 21.6 | 1.3 | 37 | 1.80 | 0.04 |
| (b) | 17.2 | 20.0 | 1.3 | 42 | 1.67 | 0.04 |
| (c) | 17.2 | 23.0 | 1.3 | 33 | 1.92 | 0.04 |
| (d) | 17.2 | 21.0 | 0.0 | 42 | 1.75 | 0,00 |

**Claims**

1. Process for preparing stable aqueous solutions of basic aluminium chlorosulphate or of basic aluminium chloride having a Cl/Al molar ratio from 0.90 to 1.22, a $SO_4$/Al molar ratio from 0.02 to 0.15 related to the basic aluminium chlorosulphate, a 50-65% basicity, according to the formula

$$\frac{\% \text{ by weight } Al_2O_3/17 - (\% \text{ by weight } Cl/35.5 + \% \text{ by weight } SO_4/48)}{\% \text{ by weight } Al_2O_3/17} \times 100,$$

an $Al_2O_3$ title up to 19% by weight and a content of Ca lower than 0.05% by weight, comprising:

A) dilution with water of aqueous solutions of basic aluminum chlorosulphate or basic aluminum chloride having a Cl/Al molar ratio comprised between 1.6 and 2.0, a $SO_4$/Al molar ratio from 0.0 to 0.05, a basicity from 33 to 42% and an $Al_2O_3$ title of about 17% by weight, until diluted solutions having an $Al_2O_3$ title from 11.8 to 13% by weight, are obtained;
B) acidification of the solution obtained in (A) with $H_2SO_4$ in amounts from 0 to 0.41 moles per mole of $Al_2O_3$ of the solution;
C) heating the solution at a temperature from 80° to 105°C and subsequent slow addition of from 0.9 to 1.98 gramatoms of subdivided metallic aluminium per mole of $Al_2O_3$ of the solution, by maintaining the reaction tenmperature at values not higher than 105°C, until complete dissolution of the metallic aluminium;
D) optional dilution with water of the solution obtained in (C) until an $Al_2O_3$ title of about 10% by weight is obtained.

2. Process acording to claim 1, wherein the acidification step (B) with $H_2SO_4$ is carried out after the reaction step (C).

3. Process according to claims 1 or 2, wherein the reaction step (C) by using metallic Al is carried out at temperatures from 80° to 95°C.

**Patentansprüche**

1. Verfahren zur Herstellung von stabilen wäßrigen Lösungen von basischem Aluminiumchlorsulfat oder von basischem Aluminiumchlorid mit einem Molverhältnis Cl/Al von 0,90 bis 1,22, einem Molverhältnis $SO_4$/Al von 0,02 bis 0,15, bezogen auf das basische Aluminiumchlorsulfat, einer Basizität von 50-65%, gemäß der Formel

$$\frac{\text{Gew.-\% } Al_2O_3/17 - (\text{Gew.-\% } Cl/35,5 + \text{Gew.-\% } SO_4/48)}{\text{Gew.-\% } Al_2O_3/17} \times 100,$$

einem $Al_2O_3$-Titer von bis zu 19 Gew.-% und einem Gehalt an Ca von weniger als 0,05 Gew.-%, umfassend:

A) Verdünnen wäßriger Lösungen von basischem Aluminiumchlorsulfat oder basischem Aluminiumchlorid mit einem Molverhältnis Cl/Al von zwischen 1,6 und 2,0, einem Molverhältnis $SO_4$/Al von 0,0 bis 0,05, einer Basizität von 33 bis 42% und einem $Al_2O_3$-Titer von ungefähr 17 Gew.-% mit Wasser bis verdünnte Lösungen mit einem $Al_2O_3$-Titer von 11,8 bis 13 Gew.-% erhalten werden;

B) Ansäuern der in (A) erhaltenen Lösung mit $H_2SO_4$ in Mengen von 0 bis 0,41 Mol pro Mol an $Al_2O_3$ der Lösung;

C) Erwärmen der Lösung auf eine Temperatur von 80°C bis 105°C und anschließend langsames Zugeben von 0,9 bis 1,98 Grammatome an unterteiltem metallischem Aluminium pro Mol an $Al_2O_3$ der Lösung durch Beibehalten der Reaktionstemperatur auf Werten von nicht höher als 105°C bis zur vollständigen Auflösung des metallischen Aluminiums;

D) optionales Verdünnen der in (C) erhaltenen Lösung . mit Wasser bis ein $Al_2O_3$-Titer von ungefähr 10 Gew.-% erhalten wird.

**2.** Verfahren nach Anspruch 1, wobei der Ansäuerungsschritt (B) mit $H_2SO_4$ nach dem Reaktionsschritt (C) durchgeführt wird.

**3.** Verfahren nach Anspruch 1 oder 2, wobei der Reaktionsschritt (C) durch Verwendung von metallischem A1 bei Temperaturen von 80°C bis 95°C durchgeführt wird.

**Revendications**

**1.** Procédé de préparation de solutions aqueuses stables de chlorosulphate d'aluminium basique ou de chlorure d'aluminium basique ayant un rapport en moles Cl/Al de 0,90 à 1,22, un rapport en moles $SO_4$/Al de 0,02 à 0,15 par rapport au chlorosulphate d'aluminium basique, une basicité de 50 à 65 % définie par la formule :

$$\frac{\% \text{ en poids d'}Al_2O_3/17-(\% \text{ en poids de } Cl/35,5 + \% \text{ en poids de } SO_4/48)}{\% \text{ en poids d'}Al_2O_3/17} \times 100$$

un titre d'$Al_2O_3$ allant jusqu'à 19 % en poids et une teneur en Ca inférieure à 0,05 % en poids, qui comprend :

A) La dilution, avec de l'eau, de solutions aqueuses de chlorosulphate d'aluminium basique ou de chlorure d'aluminium basique ayant un rapport en moles Cl/Al compris entre 1,6 et 2,0, un rapport en moles $SO_4$/Al de 0,0 à 0,05, une basicité de 33 à 42 % et un titre d'$Al_2O_3$ d'environ 17 % en poids, jusqu'à obtention de solutions diluées ayant un titre d'$Al_2O_3$ de 11,8 à 13 % en poids ;
B) L'acidification de la solution obtenue en (A), avec du $H_2SO_4$, en des quantités de 0 à 0,41 mole par mole d'$Al_2O_3$ de la solution ;
C) Le chauffage de la solution à une température de 80 à 105°C, puis la lente addition de 0,9 à 1,98 atome-gramme d'aluminium métallique subdivisé par mole d'$Al_2O_3$ de la solution, la température de la réaction étant maintenue à des valeurs non supérieures à 105°C, jusqu'à dissolution complète de l'aluminium métallique ;
D) Eventuellement, la dilution à l'eau de la solution obtenue en (C) jusqu'à obtention d'un titre d'$Al_2O_3$ d'environ 10 % en poids.

**2.** Procédé selon la revendication 1, dans lequel l'étape d'acidification (B) utilisant du $H_2SO_4$ est effectuée après l'étape de réaction (C).

**3.** Procédé selon les revendications 1 ou 2, dans lequel l'étape de réaction (C) par utilisation d'Al métallique est mise en oeuvre à des températures de 80 à 95°C.